# EUROPEAN PATENT APPLICATION

(11) **EP 4 628 602 A1**
(43) Date of publication of application: **08.10.2025**
(21) Application number: 24168872.0
(22) Date of filing: 05.04.2024
(51) Int. Cl.: C21D 1/60, B05D 7/20, C23C 26/00

(54) **METHOD OF APPLYING A COATING TO THE SURFACE OF A METAL PRODUCT**

(71) Applicant: "Gama Metal" Spólka z ograniczona odpowiedzialnoscia, 97-540 Gidle (PL)
(72) Inventor: GÓRAK, Maciej, 97-500 Radomsko (PL)
(74) Representative: Korbela, Anna

(57) **Abstract**

As shown in the drawing (in the form of a block diagram), the developed invention provides a method of applying a coating (2) to the surface of a metal product (1) (which takes the form of a metal wire, wire strand, or metal tape). The coating (2) protects the metal product (1) from corrosion or imparts physical properties ensuring corrosion protection or high flexibility of the applied coating.

The metal product (1), shaped in the technological process to the desired dimensions and cross-sectional shape, such as a metal wire, wire strand, or metal tape, is heated to a temperature of 200°C-1000°C using at least one process known from the prior art (for example, annealing, patenting, relaxation, or heating).

Next, the metal product (1) is cooled to a temperature of 150°C-500°C. In the described method, water (H₂O) serves as the cooling medium - the final cooling is done by immersion in water or spraying with water.

After cooling to a temperature of 150°C-500°C, at least one thermosetting, water-dilutable coating (2) is applied to the metal product (1), typically in the form of paint, usually by immersion or spraying.

## Description

The subject of the invention is a method of applying a coating to the surface of a metal product, i.e., wire or a wire strand or tape, which require protection and safeguarding against corrosion or need to be imparted with specific physical properties. The metal product in the form of wire or a wire strand or tape with a coating applied according to the developed invention can be used, among other things, for the manufacture of fencing mesh, ropes, lightning protection wires and tapes, and fencing.

Currently, many methods for producing wire, wire strand, or tapes are known. These methods typically involve drawing or rolling of the metallic material and coating it with protective layers to guard against corrosion or applying lacquer coatings. In these processes, at a certain stage of production, it is of vital importance that annealing, patenting (patenting involves the heat treatment of metal wire before cold drawing, similar to isothermal hardening), relaxation, or heating take place to improve the mechanical properties of the wire, wire strand, or tape.

For example, there is a method known from the description of Polish patent, exclusive right number Pat.209668 (published in BUP No. 06/2006) titled "Method of coating the surfaces of metal substrates with an organic, anionically, cationically and/or radically curable anti-corrosive composition, use of the anti-corrosive coating". The subject of the invention is a method of coating the surfaces of metal substrates with an organic, anionically, cationically, and/or radically curable anti-corrosive composition, wherein the anti-corrosive composition is a dispersion or solution containing at least two components selected from the group comprising monomers, oligomers, and polymers that are at least partially curable anionically, cationically, and/or radically, with a content of at least one monofunctional monomer and/or oligomer in the range of 1 to 50% by weight. The anti-corrosive composition further contains at least one photoinitiator for anionic, cationic, and/or radical cross-linking and a first organic corrosion inhibitor, wherein the anti-corrosive composition is applied to metal surfaces with an uncured coating thickness in the range of 1 to 25 micrometers, optionally dried, and then cured anionically, cationically, and/or radically to form an anti-corrosive coating.

There is a solution known from the description of the Polish utility model, exclusive right number Ru.053528 (published in BUP No. 25/1993) titled "Device for galvanic tinning of copper wires". The device has galvanic baths through which the wire passes, which are arranged in two rows - a degreasing, rinsing and pickling bath in the first row, and a galvanic coating and multiple rinsing bath in the second row. The degreasing and rinsing baths are adjacent to the electroplating bath, while the etching bath is adjacent to the multiple rinsing bath. The respective baths have drums with loops of wire wound on them.

There is a method known from the description of the Polish patent, exclusive right number Pat.191218 (published in BUP No. 13/2001) titled "Method of preparing steel wire or tape for applying a coating in the immersion metallization process". The method involves heat treating of the product to provide it with the required strength parameters and to clean its surface. The heating and soaking of the product are carried out under conditions that result in the formation of a compact oxide layer on its surface with weak adhesion to the substrate, while the cooling of the product is performed in two stages - first in a gaseous medium and then in water, preventing the material from hardening. During water cooling, the product is subjected to deformations that do not disturb the surface topology or alter its metallographic structure and strength parameters. The technical problem solved by patent Pat. 191218 is that during the two-stage cooling process-first in a gaseous medium and then with water-the thermal stresses formed on the product's surface during cooling, further enhanced by mechanical stresses caused by deformations, result in the cracking and detachment of the oxide layer without disturbing the surface topology or altering its metallographic structure and strength parameters. After the oxide layer is removed, the product's surface is free from contaminants that were present before heat treatment and those that formed during it. The goal of the solution known from the prior art was to achieve a surface roughness of the product that is practically the same as before heat treatment.

There is a method known from the description of the Polish patent, exclusive right number Pat.228818 (published in BUP No. 22/2016) titled "Method of annealing wire". The method involves annealing the wire in a continuous process by heating the wire with laser beam radiation, followed by winding it onto a spool and cooling it.

So far, to obtain a metal product in the form of wire, wire strand, or tape with specified dimensions, cross-section, and technical parameters, mechanical-thermal-chemical processes have been used.

The wire, wire strand, or tape which in its initial form is wound on a spool, is subjected to braiding, drawing, rolling, or pulling through appropriate meshes to give it a specified shape and size. Further in the technological process, the metal product in the form of wire, wire strand, or tape, after being given a specified shape, undergoes annealing, patenting, relaxation, or heating to obtain the required physical properties of the product. The processes of annealing, patenting, relaxation, or heating are carried out at high temperatures necessary for the given metal. The metal product is then cooled to ambient temperature and wound onto a spool or bundle. Before being wound onto the spool or bundle, or in a separate technological sequence, the metal product in the form of wire, wire strand, or tape undergoes chemical or physical processes that clean the surface or protect it against corrosion (e.g., galvanizing is used for steel wire). Currently, when a coating, such as a thermosetting paint, is applied to the metal product, it needs to be reheated to cure the coating and achieve the required physical properties. This reheating stage is replaced by a different approach in the solution according to the invention.

The aim of the developed solution is to obtain a metal product in the form of wire, wire strand, or tape covered with a coating that protects the metal product from corrosion or imparts the required technical and physical properties through a new, unexpectedly effective process. In this technological process, the metal product in the form of wire, wire strand, or tape-after being given the required cross-section-undergoes annealing, patenting, relaxation, or heating to achieve the required physical parameters. Subsequently, a coating is applied to the metal product. The annealing, patenting, relaxation, or heating process is conducted at the high temperatures described below, appropriate for the given metal. As a result of this process:
- the heat accumulated in the material during thermal processing will be utilized, thereby significantly improving the adhesion of the metal product with the applied material, and additionally
- there will be a significant reduction in the energy consumption required to obtain the finished metal product coated with a thermosetting coating, reducing the carbon footprint and significantly minimizing the environmental impact of the technological process, while simultaneously reducing the necessary procedures and processes required to obtain the finished, coated metal product in the form of steel wire, wire strand, or tape.

In the developed method, a coating is applied to the surface of a metal product in the form of wire, wire strand, or tape obtained through a physical process, particularly by drawing or rolling of the metal product, which has undergone annealing, patenting, relaxation, or heating to achieve specific physical properties (such as corrosion protection or high flexibility of the applied coating on the metal product).

The essence of this process lies in the fact that immediately after the annealing, patenting, relaxation, or heating process at a temperature of 200°C to 1000°C, during the final cooling stage, the metal product is cooled by immersion or spraying with water (H₂O) to a temperature of 150°C to 500°C. Subsequently, a water-based, thermosetting coating is applied to the surface of the cooled metal product by immersion or spraying, which undergoes thermosetting due to heat transfer from the metal product.

Preferably, in the developed method of applying the coating and cooling, the metal product is cooled in a protective atmosphere.

Typically, any coloured pigment or dye is added to the coating before it is applied to the metal product.

The developed method of applying the coating may include a step where, after the coating has solidified, the metal product is wound onto a spool or bundle or cut into sections.

The technical problem solved by the disclosed invention is to avoid the need for reheating the metal product after applying the thermosetting coating, while still achieving the required parameters of the coating. At the same time, the technological process required to obtain the finished metal product coated with a thermosetting coating is shortened.

The technological process in question is a highly advantageous solution as it does not require an additional heat source (energy) to dry and fix the thermosetting coating applied to the metal product in the form of wire, wire strand, or tape. The proposed solution is also very environmentally friendly-throughout the entire process, from annealing, patenting, relaxation, or heating of the wire, wire strand, or tape to obtaining the finished metal product coated with a coating (preferably a flexible coating with the required physical or protective properties), significantly less energy is consumed compared to previous methods. The previous process of shaping the wire, wire strand, or tape, followed by the independent process of coating of the metal product with a protective coating (including, for example, additional processes such as galvanizing) required more stages and meant more energy consumption.

Furthermore, in the process that allows for the appropriate use of water as a cooling medium, as well as water-based thermosetting coatings, chemical pollutants introduced into the environment are greatly reduced (e.g., those generated during surface etching as preparation for surface galvanizing). In the technological process in question, the metal product, which has undergone, for example, annealing, is cooled-using water as a cooling medium, preferably in a protective atmosphere-to the temperature required to fix the external coating, preferably a water-based paint. An external coating is applied to the product, which is then fixed onto it through heat transfer from the metal product itself, which is a significant advantage of the solution. In other words, the temperature reduction stage utilized to fix the thermosetting coating is a natural consequence of at least one process such as annealing, which is necessary to obtain the required properties of the metal product. A fundamental, very important advantage of the developed process is achieving adhesion (Latin: *adhaesio* - adhesion) between the coating and the metal product. Specifically, the solution in question is applied to steel wire, wire strand, or steel tape, onto which a water-based, thermosetting coating is applied after annealing, patenting, relaxation, or heating and initial cooling. After solidification or drying, the coating exhibits elastic properties (it does not peel off when bent). The coating enhances the functional properties of the finished metal product and simultaneously provides corrosion protection for the steel from which the coated metal product is made. The obtained coating can be transparent or opaque and can have a selected colour.

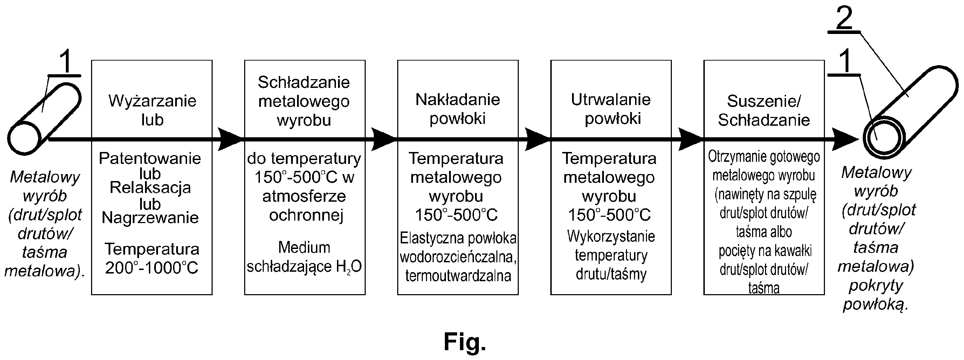

The method of applying a coating to the surface of the metal product in the form of wire, wire strand, or tape, according to the developed invention, is further illustrated in the drawing, where:
Fig. - diagram depicts a block diagram of the method of applying a coating to a metal product according to the developed invention.

As shown in the drawing (depicting a block diagram), the developed invention provides a method of applying a coating 2 to the surface of a metal product 1 (which is in the form of a metal wire, wire strand, or metal tape). The coating 2 protects the metal product 1 from corrosion or imparts physical properties to the metal product 1, ensuring corrosion protection or high flexibility of the applied coating.

Shaped to the intended dimensions and cross-sectional shape in the technological process, the metal product 1 in the form of a metal wire, wire strand, or metal tape is heated to a temperature of 200°C to 1000°C using at least one process known from the prior art (for example, annealing, patenting, relaxation, or heating).

Next, the metal product 1 is cooled to a temperature of 150°C to 500°C. In the described method, water (H₂O) serves as the cooling medium - the final cooling is carried out by immersion in water or spraying with water.

The cooling medium can be a protective atmosphere, which involves introducing a specially selected gas or gas mixture into the furnace where hardening, annealing, patenting, relaxation, or heating is conducted. Typically, hydrogen, nitrogen, or argon are supplied. It is also possible to supply specially selected mixtures with a more complex composition. The protective atmosphere prevents, in particular, the reaction of the heated metal with oxygen.

After cooling to a temperature of 150°C to 500°C, at least one thermosetting, water-based coating 2 is applied to the metal product 1, typically in the form of paint, usually by immersion or spraying.

The coating 2 is applied in such a way as to effectively isolate the surface of the metal product 1 from the surrounding atmospheric conditions encountered during the use of the metal product 1.

The coating 2 solidifies due to the action of the protective atmosphere or the evaporation of water from the coating 2, which occurs as a result of heat transfer from the metal product 1 initially at a temperature in the range of 150°C to 500°C. In this way, unexpectedly, after solidification, the coating 2 has elastic properties, preventing it from peeling off the surface of the metal product 1 during bending.

In the described process, adhesion is achieved between the metal product 1 and the coating 2 covering it. This adhesion is obtained as a result of heat transfer from the metal product 1.

The metal product 1 coated with the coating 2 is further cooled to ambient temperature and wound onto a spool or package, or cut into specified length sections in the subsequent process.

### List of designations:

1 - metal product (wire, wire strand, tape);
2 - coating.

## Claims

1. A method of applying a coating to the surface of a metal product in the form of wire, wire strand, or tape obtained through a physical process, particularly through drawing or rolling of the metal product, which, for achieving physical properties such as corrosion protection or high flexibility of the applied coating, has undergone annealing, patenting, relaxation, or heating, **characterized in that** immediately after the annealing or patenting process or relaxation or heating at a temperature of 200°C-1000°C, in the final cooling stage, the metal product (1) is cooled by immersing or spraying the metal product (1) with water (H₂O) to a temperature of 150°C -500°C, then a water-dilutable, thermosetting coating (2) is applied to the surface of the cooled metal product (1) by immersion or spraying, which is thermoset under the influence of heat released from the metal product (1).

2. The method of applying a coating according to claim 1, **characterized in that** in the final cooling stage - cooling of the metal product (1) takes place in a protective atmosphere.

3. The method of applying a coating according to claim 1 or 2, **characterized in that** any coloured pigment or dye is added to the coating (2) before it is applied to the metal product (1).

4. The method of applying a coating according to claim 1 or 2 or 3, **characterized in that** after the solidification of the coating (2), the metal product (1) is wound onto a spool or package or cut into sections.
